Europäisches Patentamt

European Patent Office

Office européen des brevets

(11) Publication number: **0 373 897**
**A2**

## (12) EUROPEAN PATENT APPLICATION

(21) Application number: **89312994.0**

(22) Date of filing: **12.12.89**

(51) Int. Cl.5: **G09G 3/36**

(30) Priority: **12.12.88 JP 313533/88**

(43) Date of publication of application:
**20.06.90 Bulletin 90/25**

(84) Designated Contracting States:
**DE ES FR GB**

(71) Applicant: **SHARP KABUSHIKI KAISHA**
**22-22 Nagaike-cho Abeno-ku**
**Osaka 545(JP)**

(72) Inventor: **Fukuda, Hidenori**
**8-21 Ogi-cho, 2-chome**
**Yaita-shi Tochigi-ken(JP)**

(74) Representative: **Brown, Kenneth Richard et al**
**R.G.C. Jenkins & Co. 26 Caxton Street**
**London SW1H 0RJ(GB)**

(54) Liquid crystal display panel.

(57) A liquid crystal display panel comprising pixels in odd-numbered lines and even-numbered lines corresponding respectively to odd-numbered lines and even-numbered lines of a video signal. During the odd-numbered field, a video signal for the odd-numbered field is supplied to the pixels in the odd-numbered lines and a black-level signal is supplied to the pixels in the even-numbered lines, whereby the image of the odd-numbered field can be displayed by the pixels in the odd-numbered lines while a black image can be displayed by the pixels in the even-numbered lines. During the even-numbered field, a video signal for the even-numbered field is supplied to the pixels in the even-numbered lines and a black-level signal is supplied to the pixels in the odd-numbered lines, whereby the image of the even-numbered field can be displayed by the pixels in the even-numbered lines while a black image can be displayed by the pixels in the odd-numbered lines.

*Fig. 1*

# LIQUID CRYSTAL DISPLAY PANEL

## BACKGROUND OF THE INVENTION

### (Field of the Invention)

The present invention relates to a liquid crystal display panel of a type having lines of pixels equal in number to the number of frame lines of a video signal.

### (Description of the Prior Art)

There is known an active matrix liquid crystal display panel of a type wherein, for example, in order to improve a vertical image resolution, pixels are employed in a number of lines equal to the number of frame lines of a video signal so that an image for odd-numbered lines can be displayed by pixels for the odd-numbered lines while an image for even-numbered lines can be displayed by pixels for the even-numbered lines.

According to the prior art active matrix liquid crystal display panel, unless image contents at the respective pixels are rewritten, the image contents are retained. Accordingly, when the current field of image is to be displayed by means of pixels for the odd-numbered or even-numbered lines, the preceding field of image is displayed by means of pixels for the even-numbered or odd-numbered lines, respectively, and, therefore, the picture being displayed tends to be blemish. Also, since the image contents are rewritten at one frame cycle, flickering tends to occur, making the displayed picture hard to look.

In view of the foregoing, an attempt has been made to provide a system wherein one and the same image is displayed by means of pixels for each neighboring lines while an image for the odd-numbered field and an image for the even-numbered field are displayed having been displaced one line period so that the respective images of the odd-numbered and even-numbered fields can be displayed alternately at one field period with the use of the respective pixcels for the odd-numbered and even-numbered lines.

According to such a display system, the image of the current field and the image of the preceding field are simultaneously displayed and, therefore, the displayed image would not be blemish. Also, since the image contents are rewritten for each field period, no flickering would occur.

However, since the same image may be displayed by the pixels in the neighboring two lines, the image displayed tends to be lowered in vertical image resolution.

## SUMMARY OF THE INVENTION

Accordingly, the present invention has been devised with a view to substantially eliminating the above discussed problem and has for its essential object to provide an improved liquid crystal display panel substantially free from the above discussed problem.

In order to accomplish the above described object, the present invention provides a liquid crystal display panel of a type having pixels in odd-numbered lines and even-numbered lines corresponding respectively to odd-numbered lines and even-numbered lines of a video signal, wherein during the odd-numbered field, a video signal for the odd-numbered field is supplied to the pixels in the odd-numbered lines and a black-level signal is supplied to the pixels in the even-numbered lines while, during the even-numbered field, a video signal for the even-numbered field is supplied to the pixels in the even-numbered lines and a black-level signal is supplied to the pixels in the odd-numbered lines.

According to the present invention, during the odd-numbered field, the image of the odd-numbered field can be displayed by the pixels in the odd-numbered lines while a black image can be displayed by the pixels in the even-numbered lines. On the other hand, during the even-numbered field, the image of the even-numbered field can be displayed by the pixels in the even-numbered lines while a black image can be displayed by the pixels in the odd-numbered lines. Therefore, the image of the current field and the image of the preceding field will not be displayed simultaneously by the pixels in the odd-numbered and even-numbered lines and, accordingly, the resultant image will not become blemish. Also, since the image contents of the pixels in the odd-numbered and even-numbered lines are rewritten for each field period, no flickering occur. Moreover, since it is not of a type wherein the same image is displayed by the pixels in the neighboring two lines, no reduction in vertical image resolution occur.

## BRIEF DESCRIPTION OF THE DRAWINGS

This and other objects and features of the present invention will become clear from the following description taken in conjunction with preferred embodiments thereof with reference to the accompanying drawings, in which:

Fig. 1 is a block diagram showing a liquid crystal display panel according to a preferred embodiment of the present invention;

Fig. 2 is a circuit diagram showing a portion of the liquid crystal display panel which is associated with an output terminal of one of signal drivers; and

Fig. 3 is a block diagram showing another preferred embodiment of the present invention.

## DETAILED DESCRIPTION OF TEE EMBODIMENT

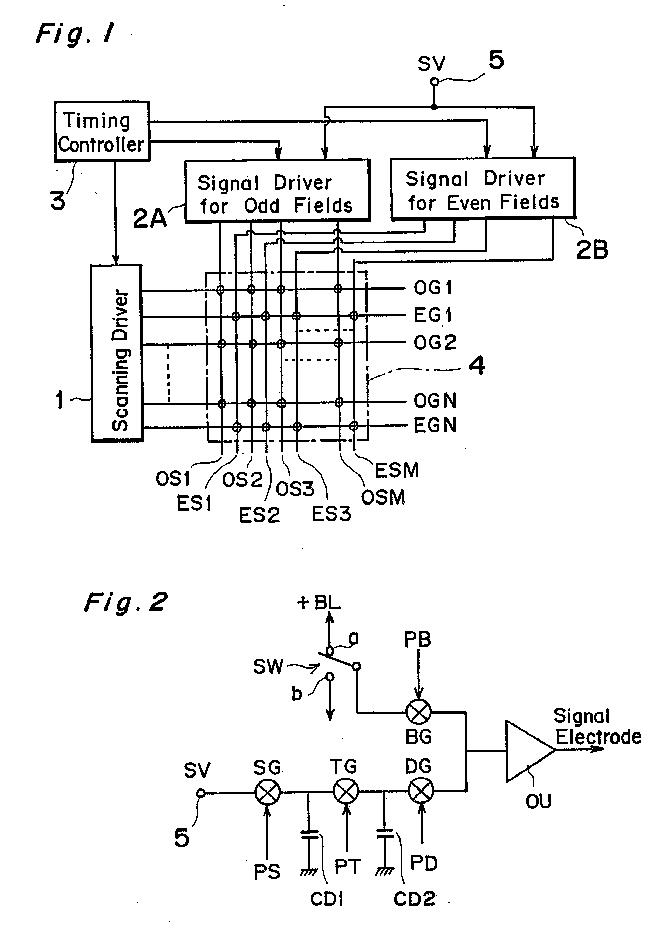

Referring first to Fig. 1 showing a first preferred embodiment of the present invention, reference numeral 1 represents a scanning driver; reference numeral 2A represents an odd-numbered field signal driver; reference numeral 2B represents an even-numbered field signal driver; and reference numeral 3 represents a controller for generating various timing signals required by the drivers 1, 2A and 2B. A liquid crystal matrix array is generally identified by 4 and includes a plurality of scanning electrodes OG1, OG2, ••• and OGN for odd-numbered lines, pluralities of scanning electrodes OS1, OS2, ••• and OSM and EG1, EG2, ••• and EGN for even-numbered lines and a plurality of signal electrodes ES1, ES2, ••• and ESM. The scanning electrodes OG1, OG2, ••• and OGN and the signal electrodes OS1, OS2, ••• and OSM are connected with gates and sources of thin-film field-effect transistors (TFT) which form respective pixels in the odd-numbered lines, whereas the scanning electrodes EG1, EG2, ••• and EGN and the signal electrodes ES1, ES2, ••• and ESM are connected with gates and sources of thin-film field-effect transistors which form respective pixels in the even-numbered lines. It is to be noted that, for the purpose of brevity, the thin-film field-effect transistors and common electrodes are not illustrated in the drawings and that each pixel is indicated by a respective circle within the block representing the liquid crystal matrix array 4.

The scanning driver 1 has a plurality of output terminals which are connected respectively with the scanning electrodes OG1, EG1, ••• OGN and EGN in the liquid crystal matrix array 4; the signal driver 2A has a plurality of output terminals which are connected respectively with the signal electrodes OS1, OS2, ••• and OSM in the liquid crystal matrix array 4; and the signal driver 2B has a plurality of output terminals which are connected respectively with the signal electrodes ES1, ES2,

••• and ESM in the liquid crystal matrix array 4.

Each of the signal drivers 2A and 2B is adapted to receive a video signal SV from an input terminal 5. In this case, since the liquid crystal itself is designed to be driven by an alternating current, the video signal supplied to each of the signal drivers 2A and 2B has its polarity reversed for a predetermined cycle, for example, for each horizontal period. In such case, the maximum positive and negative levels of the video signal SV represent a black level.

During the odd-numbered field, for each line, video signals at respective sampling points for each line are outputted to the plural output terminals of the signal driver 2A. As the video signals at the sampling points for each line are sequentially outputted, sequential scanning signals are outputted to the plural output terminals of the scanning driver 1 corresponding to the scanning electrodes OG1, OG2, ••• and OGN in the liquid crystal matrix array 4. Also, during the odd-numbered field, black level signals are outputted to the plural output terminals of the signal driver 2B. Then, sequential scanning signals are outputted for each line to the plural output terminals of the scanning driver 1 corresponding to the scanning electrodes EGI, EG2, ••• and EGN in the liquid crystal matrix array 4. Accordingly, the video signals for odd-numbered fields are sequentially supplied to and written in the pixels in the odd-numbered lines in the liquid crystal matrix array 4 and, at the same time, the black level signals are sequentially supplied to and written in the pixels in the even-numbered lines. In other words, for each line, the pixels in the neighboring odd-numbered and even-numbered lines are simultaneously selected with the video signal for the odd-numbered fields being written in the former and with the black level signal being written in the latter.

On the other hand, during the even-numbered field, the black level signals are outputted to the plural output terminals of the signal driver 2A. And, for each line, the sequential scanning signals are outputted to the plural output terminals of the scanning driver 1 corresponding to the scanning electrodes OG1, OG2, ••• and OGN in the liquid crystal matrix array 4. During this even-numbered field, for each line, video signals at respective sampling points for each line are outputted to the plural output terminals of the signal driver 2B. As the video signals at the sampling points for each line are sequentially outputted, sequential scanning signals are outputted to the plural output terminals of the scanning driver 1 corresponding to the scanning electrodes EG1, EG2, ••• and EGN in the liquid crystal matrix array 4. Accordingly, the black level signals are sequentially supplied to and written in the pixels in the odd-numbered lines and the video signals for even-numbered fields are sequentially supplied to and written in the pixels in the even-numbered lines in the liquid crystal matrix array 4. In other words, for each line, the pixels in the neighboring even-numbered and odd-numbered lines are simultaneously selected with the black level signal being written in the former and with the video signal for the even-numbered fields being written in the latter.

Fig. 2 illustrates a portion associated with one of the respective output terminals of the signal drivers 2A and 2B.

Referring now to Fig. 2, the video signal SV supplied through the input terminal 5 is supplied to a gating circuit SG to which a gating signal PS is also supplied from the controller 3 at a timing corresponding to the sampling point. The video signal gated by the gating circuit SG is retained in a capacitor CD1. The signal retained in this capacitor CD1 is also supplied to a gating circuit TG to which a gating signal PT is also supplied from the controller 3 at a timing at which the sampling of one line finishes. The signal gated by this gating circuit TG is retained in a capacitor CD2. The signal retained in the capacitor CD2 is also supplied to a gating circuit DG.

A changeover switch SW has a movable contact and a pair of fixed contacts a and b, the fixed contact a being connected with a source of a direct current voltage +BL while the fixed contact b is connected with a source of a direct current voltage -BL. These Dc voltages +BL and -BL represent respective black level signals corresponding respectively to the polarities of the video signal SV. This changeover switch SW has its movable contact selectively engaged to one of the fixed terminals a and b depending on change in polarity of the video signal SV. A signal emerging from this changeover switch SW is supplied to a gating circuit BG.

Thus, so far as the signal driver 2A is concerned, during the odd-numbered field, a gating signal PD is supplied for each line from the controller 3 to the gating circuit DG and the video signal for the odd-numbered field retained in the capacitor CD2 is supplied to an output stage OU through the gating circuit DG. Also, in the signal driver 2A, during the even-numbered field, a gating signal PB is supplied from the controller 3 to the gating circuit BG and the black level signal outputted from the changeover switch SW is supplied to the output stage OU through the gating circuit BG.

Also, so far as the signal driver 2B is concerned, during the odd-numbered field, the gating signal PB is supplied from the controller 3 to the gating circuit BG and the black level signal outputted from the changeover switch SW is supplied to the output stage OU through the gating circuit BG.

Also, in the signal driver 2B, during the even-numbered field, the gating signal PD is supplied from the controller 3 to the gating circuit DG and the video signal of the even-numbered field retained in the capacitor CD2 is supplied to the output stage OU through the gating circuit DG.

Thus, in the illustrated embodiment of the present invention, since the video signals of the odd-numbered fields are supplied to the pixels in the odd-numbered lines in the liquid crystal matrix array 4, the image of the odd-numbered fields can be displayed through the pixels in the odd-numbered lines. Also, since at this time the black level signals are supplied to the pixels in the even-numbered lines in the liquid crystal matrix array 4, a black image can be displayed through the pixels in the even-numbered lines. On the other hand, during the even-numbered fields, the video signals of the even-numbered fields are supplied to the pixels in the even-numbered lines in the liquid crystal matrix array 4 and, therefore, the image of the even-numbered fields can be displayed through the pixels in the even-numbered lines. On the other hand, since the black level signals are supplied to the pixels in the odd-numbered lines in the liquid crystal matrix array 4, the black image can be displayed through the pixels in the odd-numbered lines in the liquid crystal matrix array 4.

Thus, according to the present invention, the image of the current field and the image of the preceding field will not be displayed simultaneously through the pixels in the odd-numbered lines and the even-numbered lines in the liquid crystal matrix array 4, the displayed image will not become blemish. Also, image contents at the pixels in the odd-numbered and even-numbered lines in the liquid crystal matrix array 4 are rewritten for each field period, no flickering will occur. Moreover, since the same image are not displayed through the pixels in the neighboring two lines, no reduction in vertical image resolution will occur.

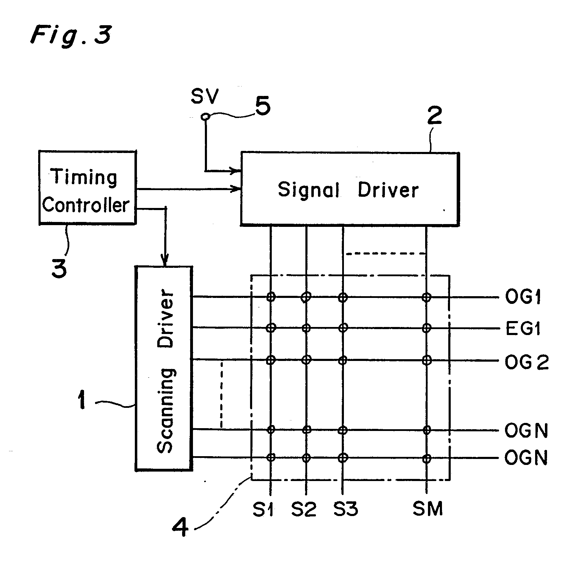

Hereinafter, a second preferred embodiment of the present invention will now be described with particular reference to Fig. 3. While parts shown in Fig. 3 which are alike to those shown in Fig. 1 are designated by like reference numerals, the second preferred embodiment of the present invention is featured in that only one signal driver is employed.

Referring now to Fig. 3, reference numeral 1 represents a scanning driver; reference numeral 2 represents a signal driver; and reference numeral 3 represents a controller for generating various timing signals required by the scanning and signal drivers 1 and 2. A liquid crystal matrix array is generally identified by 4 and includes a plurality of scanning electrodes OG1, OG2, • • • and OGN for odd-numbered lines, and a plurality of scanning electrodes EG1, EG2, • • • and EGN for even-numbered lines and a plurality of signal electrodes S1, S2, • • • and SM. The scanning electrodes OG1, OG2, • • • and OGN and the signal electrodes S1, S2, • • • and SM are connected with gates and sources of thin-film field-effect transistors (TFT) which form respective pixels in the odd-numbered lines, whereas the scanning electrodes EG1, EG2, • • • and EGN and the signal electrodes S1, S2, • • • and SM are connected with gates and sources of thin-film field-effect transistors which form respective pixels in the even-numbered lines. It is to be noted that, for the purpose of brevity, the thin-film field-effect transistors and common electrodes are not illustrated in the drawings and that each pixel is indicated by a respective circle within the block representing the liquid crystal matrix array 4.

The scanning driver 1 has a plurality of output terminals which are connected respectively with the scanning electrodes OG1, EG1, • • • OGN and EGN in the liquid crystal matrix array 4; and the signal driver 2 has a plurality of output terminals which are connected respectively with the signal electrodes S1, S2, • • • and SM in the liquid crystal matrix array 4.

The signal driver 2 is adapted to receive a video signal SV from an input terminal 5. In this case, since the liquid crystal itself is designed to be driven by an alternat ing current, the video signal supplied to the signal driver 2 has its polarity reversed for a predetermined cycle, for example, for each horizontal period. In such case, the maximum level of the absolute value of the video signal SV represent a black level.

During the odd-numbered field, for each line, both of video signals at respective sampling points for each line and black level signals are continuously outputted to the plural output terminals of the signal driver 2. As the video signals at the sampling points for each line are sequentially outputted, sequential scanning signals are outputted to the plural output terminals of the scanning driver 1 corresponding to the scanning electrodes OG1, OG2, • • • and OGN in the liquid crystal matrix array 4 and, as the black level signals are sequentially outputted to the plural output terminals of the signal driver 2, sequential scanning signals are outputted for each line to the plural output terminals of the scanning driver 1 corresponding to the scanning electrodes EG1, EG2, • • • and EGN in the liquid crystal matrix array 4. Accordingly, the video signals for odd-numbered fields are sequentially supplied to and written in the pixels in the odd-numbered lines in the liquid crystal matrix array 4 and, at the same time, the black level signals are sequentially supplied to and written in the pixels in the even-numbered lines. In other words, for each line, the pixels in the neighboring odd-numbered and even-numbered lines are simultaneously selected during one scanning period with the video signal for the odd- numbered fields being written in the former and with the black level signal being written in the latter.

On the other hand, during the even-numbered field, both of the black level signals and the video signals at the sampling points for one line are continuously outputted to the plural output terminals of the signal driver 2. And, as the black level signals are sequentially outputted, the sequential scanning signals are outputted to the plural output terminals of the scanning driver 1 corresponding to the scanning electrodes OG1, OG2, • • • and OGN in the liquid crystal matrix array 4 and, as the video signals at the sampling points for each line are sequentially outputted, each line, video signals at respective sampling points for each line are outputted to the plural output terminals of the scanning driver 1 corresponding to the scanning electrodes EG1, EG2, • • • and EGN in the liquid crystal matrix array 4. Accordingly, the black level signals are sequentially supplied to and written in the pixels in the odd-numbered lines and the video signals for even-numbered fields are sequentially supplied to and written in the pixels in the even-numbered lines in the liquid crystal matrix array 4. In other words, for each line, the pixels in the neighboring even-numbered and odd-numbered lines are simultaneously selected during one scanning period with the black level signal being written in the former and with the video signal for the even-numbered fields being written in the latter.

It is to be noted that a portion associated with one of the output terminals of the signal driver 2 is constructed in a manner similar to that shown in Fig. 2 as is the case with any one of the signal drivers 2A and 2B shown in Fig. 1.

In such case, during the odd-numbered field, the gating signals PD and PB are continuously supplied from the controller 3 to the gating circuits DG and BG for each line. The video signal for the odd-numbered field retained in the capacitor CD2 is first supplied to the output stage OU through the gating circuit DG, followed by the supply of the black level signal to the output stage OU through the changeover switch SW and then through the gating circuit BG.

On the other hand, during the even-numbered field, the gating signals PB and PD are continuously supplied from the controller 3 to the gating circuits BG and DG for each line. Then, the black level signal is first supplied to the output stage OU through the changeover switch SW and then through the gating circuit BG, followed by the supply of the video signal for the even-numbered field, retained in the capacitor CD2, to the output stage OU through the gating circuit DG.

Thus, in the illustrated embodiment of the present invention, since the video signals of the odd-numbered fields are supplied to the pixels in the odd-numbered lines in the liquid crystal matrix array 4, the image of the odd-numbered fields can be displayed through the pixels in the odd-numbered lines. Also, since at t his time the black level signals are supplied to the pixels in the even-numbered lines in the liquid crystal matrix array 4, a black image can be displayed through the pixels in the even-numbered lines. On the other hand, during the even-numbered fields, the video signals of the even-numbered fields are supplied to the pixels in the even-numbered lines in the liquid crystal matrix array 4 and, therefore, the image of the even-numbered fields can be displayed through the pixels in the even-numbered lines. On the other hand, since the black level signals are supplied to the pixels in the odd-numbered lines in the liquid crystal matrix array 4, the black image can be displayed through the pixels in the odd-numbered lines in the liquid crystal matrix array 4.

Thus, even in the second preferred embodiment of the present invention, since the image can be displayed in a manner similar to that in the first preferred embodiment, effects similar to those afforded by the liquid crystal display panel according to the first preferred embodiment can be obtained. Also, according to the second preferred embodiment of the present invention, the liquid crystal display panel can be fabricated with the use of the single signal driver and, therefore, the circuit can be made simple.

From the foregoing description of the present invention, it is clear that, since the image of the current field and the image of the preceding field will not be displayed simultaneously through the pixels in the odd-numbered lines and the even-numbered lines, the displayed image will not become blemish. Also, since the image contents at the pixels in the odd-numbered and even-numbered lines in the liquid crystal matrix array 4 are rewritten for each field period, no flickering will occur. Moreover, since the same image are not displayed through the pixels in the neighboring two lines, no reduction in vertical image resolution will occur. Accordingly, the utilization of the liquid crystal display panel according to the present invention makes it possible to considerably improve the quality of the image being displayed.

Although the present invention has been fully described in connection with the preferred embodiments thereof with reference to the accompanying drawings, it is to be noted that various changes and modifications are apparent to those skilled in the art without departing from the scope of the present invention as defined by the appended claims. Accordingly, such changes and modifications are to be understood as included within the scope of the present invention unless they depart therefrom.

There are described above novel features which the skilled man will appreciate give rise to advantages. These are each independent aspects of the invention to be covered by the present application, irrespective of whether or not they are included within the scope of the following claims.

## Claims

1. A liquid crystal display panel which comprises:

a plurality of pixels in odd-numbered lines and even-numbered lines corresponding respectively to odd-numbered lines and even-numbered lines of a video signal;
means for supplying, during the odd-numbered field, a video signal for the odd-numbered field to the pixels in the odd-numbered lines and a black level signal to the pixels in the even-numbered lines; and
means for supplying, during the even-numbered field, a video signal for the even-numbered field to the pixels in the even-numbered lines and a black level signal to the pixels in the odd-numbered lines.

2. A matrix display device having an array of pixel elements arranged in lines, and drive means for driving said array in accordance with an input video signal, said drive means being operable to drive odd-numbered lines with video signals in an odd field and even-numbered lines with video signals in an even field, and in each said field to drive with black level signals those lines which are not driven with video signals.

## Fig. 1

## Fig. 2

## Fig. 3